# EUROPÄISCHE PATENTSCHRIFT

(11) **EP 2 918 325 B1**
(45) Veröffentlichungstag und Bekanntmachung des Hinweises auf die Patenterteilung: **08.11.2017**
(21) Anmeldenummer: 15158562.7
(22) Anmeldetag: 11.03.2015
(51) Int. Cl.: B01D 21/30, B01D 21/00, B01D 21/34, B01D 21/24

(54) **VERFAHREN UND VORRICHTUNG ZUM ABZUG VON SCHWIMMSCHLAMM**
METHOD AND DEVICE FOR DISCHARGE OF FLOATING SLUDGE
MÉTHODE ET DISPOSITIF D'ASPIRATION D'ÉCUME

(30) Priorität: 13.03.2014 AT 501852014
(43) Veröffentlichungstag der Anmeldung: 16.09.2015
(73) Patentinhaber: Ginzler Stahl- u. Anlagenbau GmbH, 3300 Amstetten (AT); Stieger, Clemens, 1140 Wien (AT)
(72) Erfinder: Stieger, Clemens, 1140 WIEN (AT); Ginzler, Hubert, 3300 AMSTETTEN (AT)
(74) Vertreter: Babeluk, Michael

(56) Entgegenhaltungen:
- EP-A2- 0 815 912
- FR-A- 1 314 495
- US-A- 4 196 087
- US-A- 5 421 995
- US-B1- 6 238 559

## Beschreibung

Die Erfindung betrifft eine Vorrichtung zum Abzug von Schwimmschlamm von einer Flüssigkeitsoberfläche mit schwankendem Flüssigkeitsspiegel gemäß dem Oberbegriff von Patentanspruch 1.
Dabei ist mindestens eine entlang der Flüssigkeitsoberfläche angeordnete Förderschnecke vorgesehen, die aus einem Zentralrohr aufgebaut ist, an dem eine Schraubfläche angebracht ist, sowie ein an einer stromaufwärtigen Seite der Förderschnecke angebrachter Abzugskasten.
Beim Betrieb von Kläranlagen ist es erforderlich, regelmäßig Schwimmschlamm abzuziehen, um die Funktionsfähigkeit der Kläranlage zu erhalten. Dabei haben sich Schneckensysteme besonders bewährt, bei denen eine Förderschnecke an der Flüssigkeitsoberfläche angeordnet ist, die den Schwimmschlamm zu einem Abzugskasten fördert. Solange eine gleichmäßige Höhe des Flüssigkeitsspiegels gewährleistet ist, ist eine solche Vorrichtung relativ problemlos herzustellen. In vielen Fällen kann jedoch das betriebsbedingte Auftreten von Schwankungen des Flüssigkeitsspiegels nicht vermieden werden. In diesem Fall müssen besondere Vorkehrungen getroffen werden, um einen zuverlässigen Betrieb der Förderschnecke zu gewährleisten.
Aus der vorveröffentlichten AT 407 222 B ist eine einschlägige Lösung bekannt geworden, bei der die Förderschnecke schwimmend ausgeführt ist, so dass stets eine gleichbleibende Lage in Bezug auf die Flüssigkeitsoberfläche gewährleistet ist. Es hat sich jedoch herausgestellt, dass die schwimmende Lagerung aufwändig und fehleranfällig ist. Ähnliche Nachteile treffen auch af die Lösung zu, die in der EP 815 912 A und US 6,238,559 offenbart ist. Auch die US 4,196,087 A und die US 4,391,707 A betreffen solche schwimmende Lagerungen, wobei zwar der Auftrieb durch teilweise Flutung des Zentralrohrs einstellbar ist, aber die obigen Probleme bleiben auch hier bestehen.
An sich kann durch eine fixe Lagerung, die zwar die Möglichkeit einer Höhenverstellung bieten kann, aber während des Betriebs grundsätzlich eine feste Höhe aufweist, das Auftreten der obigen Nachteile vermieden werden. Der schwankende Flüssigkeitsspiegel bewirkt allerdings, dass relativ große Auftriebskräfte auf die Förderschnecke wirken können, was eine entsprechend massive und aufwändige Konstruktion erfordert und die Lager entsprechend belastet.
Aufgabe der vorliegenden Erfindung ist es, diese Nachteile zu vermeiden und eine Lösung anzugeben, die es ermöglicht, eine einfache und robuste Konstruktion zu verwirklichen.

Erfindungsgemäß werden diese Aufgaben durch die Merkmale von Patentanspruch 1 gelöst.

Wesentlich ist insbesondere, dass das Zentralrohr der Förderschnecke einen Durchmesser aufweist, der in der Größenordnung der Schwankungsbreite des Flüssigkeitsspiegels liegt, und dass das Zentralrohr auftriebsneutral ausgebildet ist.

Wesentlich an der vorliegenden Erfindung ist auch, dass die Förderschnecke grundsätzlich fest, d.h. in einer bestimmten Höhenlage angebracht ist. Um jedoch eine optimale Einstellung vornehmen zu können, ist dabei die Förderschnecke höhenverstellbar an einer Tragstruktur angebracht. Die Höhenverstellung wird dabei jedoch nur im Zuge von Wartungsarbeiten, nicht jedoch laufend vorgenommen.

Im Rahmen der vorliegenden Beschreibung soll der Begriff auftriebsneutral in dem Sinn verstanden werden, dass der Auftrieb möglichst unabhängig von der Eintauchtiefe der betreffenden Struktur ist. Dies bedeutet, dass das auftriebswirksame Volumen minimiert wird.

Bei der vorliegenden Erfindung wird dies dadurch erreicht, dass das Zentralrohr hohl ist und mindestens eine mit der Flüssigkeit in Kontakt stehende Öffnung aufweist. Aufgrund der relativ großen Dichte von Stahl und der Vermeidung von geschlossenen Hohlräumen ist der Auftrieb der Förderschnecke in Bezug auf das Gewicht gering, so dass die Änderung des Auftriebs in Abhängigkeit von der Eintauchtiefe in Relation zur Gewichtskraft vernachlässigbar ist.

Konstruktiv günstig ist es dabei, wenn diese mindestens eine Öffnung an einem Ende des Zentralrohrs vorgesehen ist, so dass das Rohr innen entsprechend dem Flüssigkeitsspiegel teilweise mit Flüssigkeit gefüllt ist.

Die Tragstruktur kann fest sein, oder aber auch ein in Horizontalrichtung beweglicher Rahmen sein, der die Förderschnecke entlang der Flüssigkeitsoberfläche bewegt. Die Maßnahme, dass die Förderschnecke entlang der Flüssigkeitsoberfläche beweglich angeordnet ist, kann durch Rotation in einem runden Becken oder durch eine lineare Bewegung quer zur Längsrichtung der Förderschnecke realisiert werden. Dies bewirkt, dass große Oberflächen vom Schwimmschlamm befreit werden können.

Eine besonders begünstigte Ausführungsvariante der Erfindung sieht parallel zur Förderschnecke eine Tauchwand vor. Typischerweise ist diese Tauchwand an der stromabwärtigen Seite einer horizontal bewegten Förderschnecke angeordnet.

Dadurch wird insbesondere erreicht, dass Teile des Schwimmschlamms, die nicht sofort von der Förderschnecke erfasst und abtransportiert werden, im Bereich der Förderschnecke gefangen werden und letztlich doch zum Abzugskasten transportiert werden.

Die Effizienz der Förderschnecke kann insbesondere dadurch gesteigert werden, dass die Förderschnecke eine in Förderrichtung nach vorne geneigte Schraubfläche mit konstantem Außendurchmesser aufweist. Es hat sich überraschenderweise herausgestellt, dass diese Neigung deshalb besonders vorteilhaft ist, da die erfindungsgemäße Förderschnecke je nach Flüssigkeitsspiegel unterschiedlich tief eintaucht. So kann die Förderwirkung weitgehend unabhängig von der Eintauchtiefe gemacht werden.

Von besonderem Vorteil ist es, wenn der Abzugskasten einen schwimmend angeordneten Innenteil aufweist, an dem eine Wasserüberfallkante ausgebildet ist. Dadurch kann insbesondere eine automatische Anpassung an die Pumpleistung erreicht werden, da die Wasserüberfallkante umso stärker absinkt, je stärker die Pumpe Flüssigkeit aus dem Abzugskasten abpumpt.

Vorzugsweise ist die Förderschnecke über eine Kunststoffkette angetrieben. Diese befindet sich typischerweise an dem vom Abzugskasten entfernten Ende der Förderschnecke.

Die Erfindung betrifft auch ein Verfahren zum Abzug von Schwimmschlamm von einer Flüssigkeitsoberfläche mit schwankendem Flüssigkeitsspiegel, mit einer Vorrichtung der oben beschriebenen Art, vorzugsweise mit einer entlang der Flüssigkeitsoberfläche angeordneten Förderschnecke, die aus einem Zentralrohr aufgebaut ist, an dem eine Schraubfläche angebracht ist, und mit einem an einer stromaufwärtigen Seite der Förderschnecke angebrachten Abzugskasten.

Erfindungsgemäß ist dabei insbesondere vorgesehen, dass die Anwesenheit von Schwimmschlamm durch einen Sensor überwacht wird und bei Bedarf eine Tauchpumpe aktiviert wird, die Flüssigkeit aus einem Gehäuse des Abzugskastens abzieht.

Dadurch kann eine wesentliche Energieersparnis erzielt werden, da die Tauchpumpe nur dann fördert, wenn tatsächlich Schwimmschlamm in merkbarer Menge vorliegt.

In der Folge wird die vorliegende Erfindung anhand der in den Figuren dargestellten Ausführungsbeispiele näher erläutert. Es zeigen schematisch:
- Fig. 1: eine erste Ausführungsvariante der Erfindung in einem Schnitt nach Linie I - I in Fig. 2;
- Fig. 2: die Ausführungsvariante von Fig. 1 in einer Draufsicht;
- Fig. 3: eine zweite Ausführungsvariante der Erfindung in einem Schnitt nach Linie III - III in Fig. 4;
- Fig. 4: die Ausführungsvariante von Fig. 3 in einer Draufsicht;
- Fig. 5: eine dritte Ausführungsvariante der Erfindung in einem Schnitt nach Linie V - V in Fig. 6;
- Fig. 6: die Ausführungsvariante von Fig. 5 in einer Draufsicht;
- Fig. 7: bis Fig. 10 verschiedene Ausbildungen von Förderschnecken jeweils in einer Draufsicht;
- Fig. 11: bis Fig. 13 Ansichten, die die Funktion das Abzugskastens erklären;
- Fig. 14: und Fig. 15 zwei weitere Ausführungsvarianten der vorliegenden Erfindung in einer Draufsicht; und
- Fig. 16: und Fig. 17 Gesamtdarstellungen eines Beckens im Schnitt bzw. in Draufsicht.

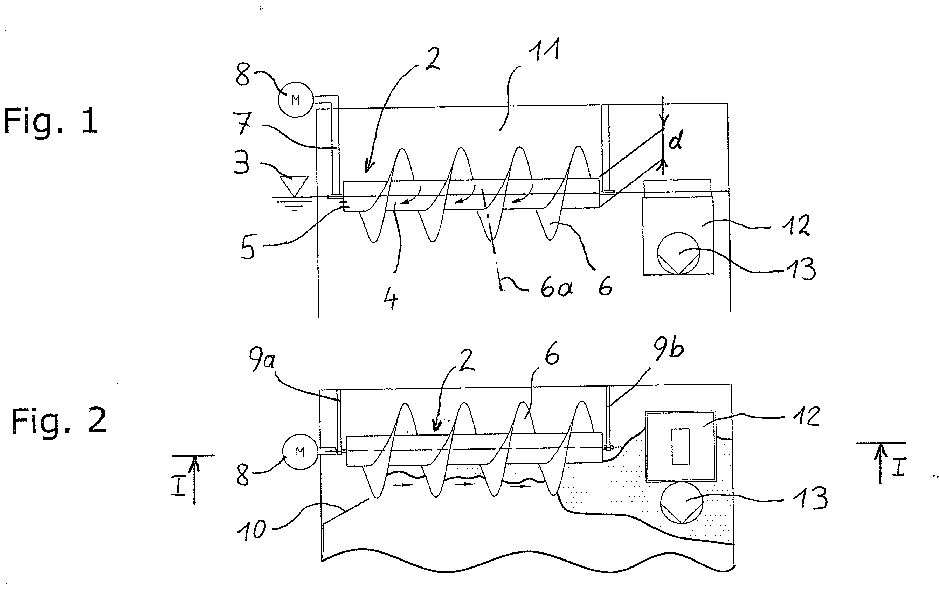

Bei der Ausführungsvariante von Fig. 1 und Fig. 2 ist in einem rechteckigen Becken 1 eine Förderschnecke 2 mit einer Längsachse 2a so angeordnet, dass die Längsachse 2a etwa auf der Höhe des durchschnittlichen Flüssigkeitsspiegels 3 liegt. Die Förderschnecke 2 besteht aus einem Zentralrohr 4 mit einem Durchmesser d, der so gewählt ist, dass die betriebsmöglichen Schwankungen des Flüssigkeitsspiegels 3 abgedeckt sind, d.h. das auch beim niedrigsten Flüssigkeitsspiegel 3 das Zentralrohr 4 ins Wasser eintaucht und der höchstmögliche Flüssigkeitsspiegel 3 nicht oberhalb des Zentralrohrs 4 liegt.

Das Zentralrohr 4 ist innen hohl ausgebildet und der Innenraum steht über mindestens eine Öffnung 5 in einer Stirnfläche mit der Außenseite in Verbindung. Auf diese Weise liegt im Inneren der Förderschnecke 2 stets ein Flüssigkeitsspiegel vor, der im Wesentlichen dem Flüssigkeitsspiegel 3 im Becken entspricht, so dass keine stark schwankenden Auftriebs- oder Gewichtskräfte zu erwarten sind.

Am Zentralrohr 4 ist eine Schraubfläche 6 vorgesehen, die in Förderrichtung geneigt ausgebildet ist, wie durch die Linie 6a angedeutet ist, die in der Ebene der Schraubfläche 6 liegt und die Achse 2a der Förderschnecke 2 schneidet.

Die Förderschnecke 2 ist über einen Kunststoffriemen oder eine Kunststoffkette 7 und einem Getriebemotor 8 angetrieben. Sie ist auf mechanisch höhenverstellbaren ausgeführten Konsolen 9a, 9b gelagert, so das bei der Installation oder im Zuge von Wartungsarbeiten die Höhenlage der Förderschnecke 2 an den mittleren Flüssigkeitsspiegel 3 angepasst werden kann. Einem Durchmesser d des Zentralrohrs 4 von mehr als 250 mm kann somit eine Flüssigkeitsspiegelschwankung von 125 mm in beide Richtungen überbrückt werden. Ein Leitblech 10 dient dazu, ein Eindringen von Schwimmschlamm in den Raum 11 hinter der Förderschnecke 2 zu verhindern.

In axialer Verlängerung der Förderschnecke 2 ist ein Abzugskasten 12 mit einer Tauchmotorpumpe 13 vorgesehen, der dazu ausgebildet ist, um Flüssigkeit und Schwimmschlamm aus dem Becken 1 abzuziehen.

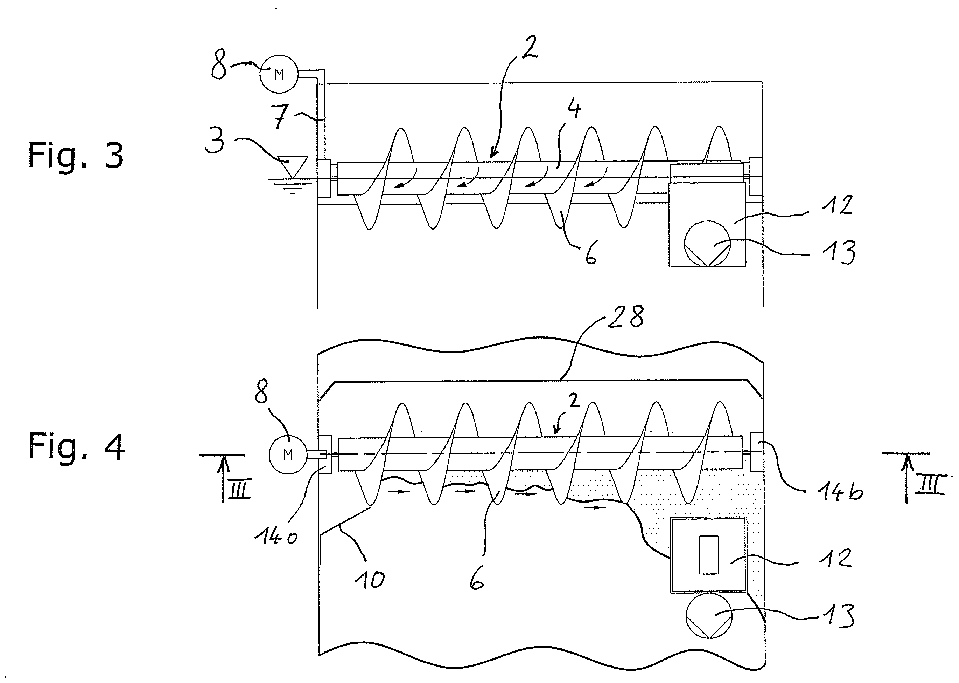

Die Ausführungsvariante von Fig. 3 und Fig. 4 entspricht weitgehend der der Fig. 1 und Fig. 2, mit dem Unterschied, dass die Förderschnecke 2 in Lagern 14a und 14b gelagert ist, die in Axialrichtung der Förderschnecke 2 am Rand des Beckens 1 angebracht sind. Dementsprechend ist der Abzugskasten 12 nicht seitlich neben sondern in Strömungsrichtung vor der Förderschnecke 2 angeordnet.

Stromabwärts der Förderschnecke 2 und parallel zu ihr ist eine höhenverstellbare Tauchwand 28 vorgesehen, die einen unerwünschten Austrag von nicht angezogenen Schwimmschlamm verhindert.

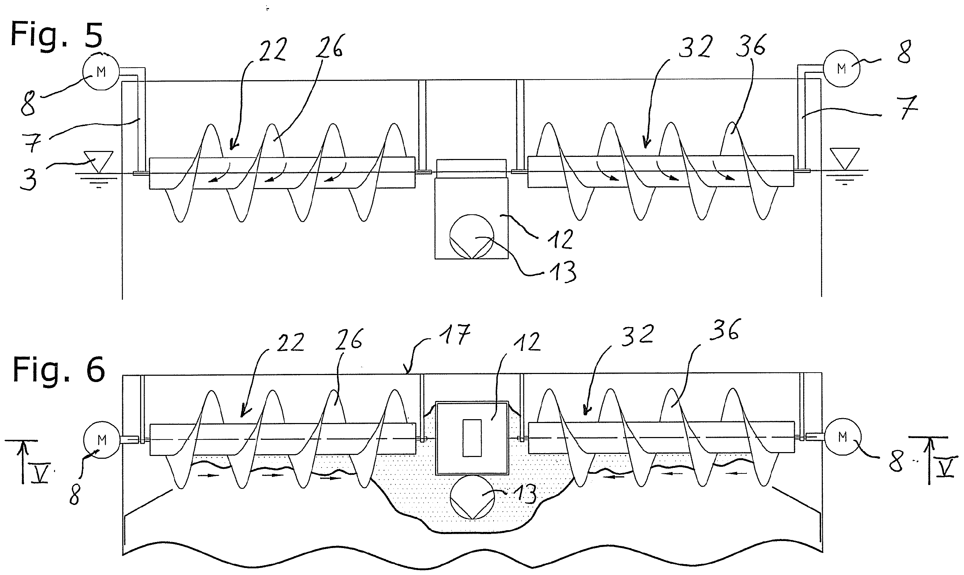

Bei der Ausführungsvariante der Fig. 5 und Fig. 6, die für größere Becken 1 vorgesehen ist, ist der Abzugskasten 12 etwa in der Mitte der Stirnseite 17 des Beckens 1 angeordnet, und es sind zwei gegensinnig orientierte Förderschnecken 22, 32 seitlich neben dem Abzugskasten 12 angeordnet. Gegensinnig orientiert heißt in diesem Zusammenhang, dass eine der Schraubflächen 26, 36 rechtsgängig und die andere linksgängig ausgebildet ist.

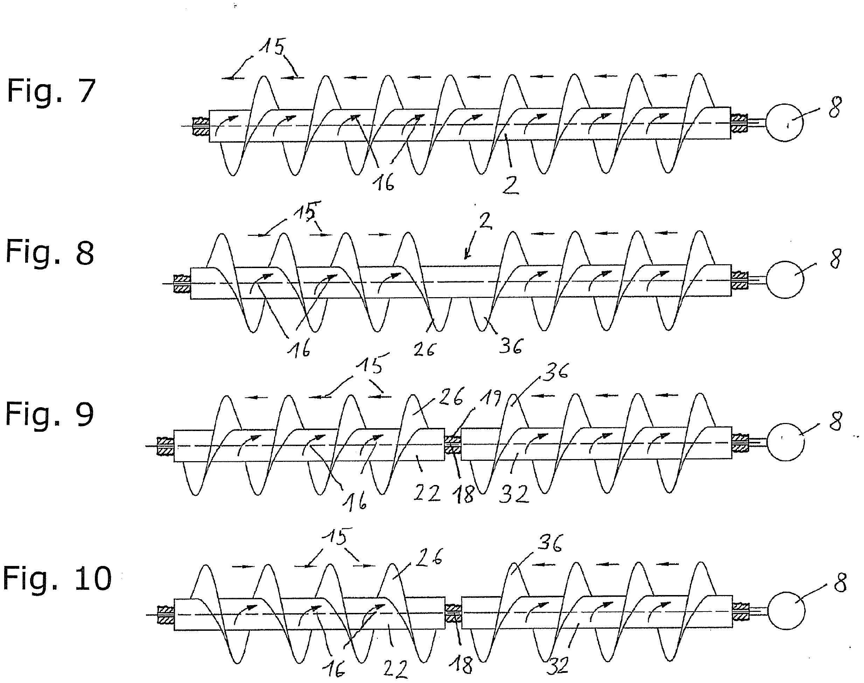

In den Fig. 7 bis Fig. 10 sind verschiedene Varianten von Förderschnecken 2, 22, 32 dargestellt. In diesen Figuren ist jeweils die Förderrichtung mit ersten Pfeilen 15 gekennzeichnet, während die Drehrichtung der Förderschnecken 2, 22, 32 mit zweiten Pfeilen 16 angedeutet ist.

Bei der Ausführungsvariante von Fig. 7 liegt eine einzelne Förderschnecke 2 mit einer einzigen Schraubfläche 6 vor, so wie dies bei den Ausführungsvarianten der Fig. 1 bis Fig. 4 der Fall ist.

In Fig. 8 ist eine einzelne Förderschnecke 2 dargestellt, auf der zwei gegenläufig orientierte Schraubflächen 26, 36 aufgebracht sind, um eine Förderwirkung in Richtung der Mitte der Förderschnecke 2 zu bewirken.

Bei der Ausführungsvariante von Fig. 9 sind zwei Förderschnecken 22, 32 vorgesehen, die auf einer gemeinsamen Welle 18 angeordnet sind. Dies ermöglicht eine zusätzliche Lagerung 19 zwischen den beiden Förderschnecken 22, 32. Die Schraubflächen 26, 36 sind gleichsinnig orientiert, so dass beide Förderschnecken 22, 32 in die gleiche Richtung fördern, d.h. in der vorliegenden Darstellung nach links.

Fig. 10 unterscheidet sich von Fig. 9 dadurch, dass die Schraubflächen 26, 36 gegensinnig orientiert sind, so dass die Förderschnecken 22, 32 zur Mitte hin fördern.

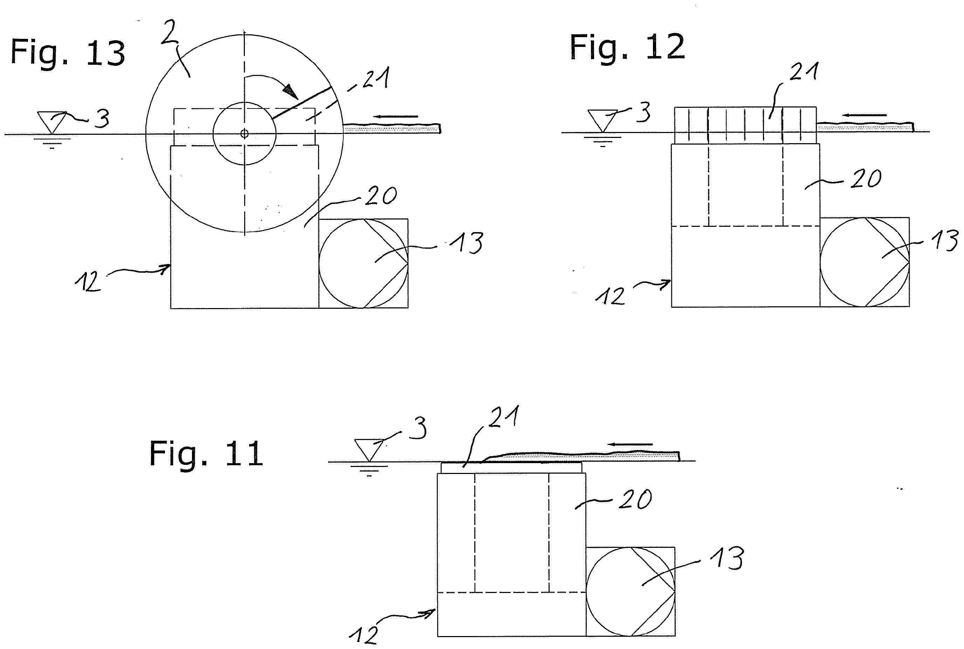

In Fig. 11 ist ein Abzugskasten 12 in einer seitlichen Ansicht dargestellt. In einem Gehäuse 20 ist ein Innenkasten 21 in vertikaler Richtung verschiebbar angeordnet, der sich entsprechend dem Flüssigkeitsspiegel 3 auf und ab bewegt. Eine Oberkante des Innenkastens 21 ist als Wasserüberfallkante ausgebildet, über die die Flüssigkeit samt Schwimmschlamm in den Abzugskasten 12 einströmt. In Fig. 11 ist die Stellung bei eingeschalteter Tauchpumpe ersichtlich, während in der Fig. 12 die Ruhestellung dargestellt ist.

Die Höhenlage des Abzugskastens 12, und zwar des Gehäuses 20 wird durch einen nicht dargestellten Schieber eingestellt, wobei diese Einstellung typischerweise einmalig für eine längere Betriebsdauer und nicht laufend erfolgt.

In Fig. 13 ist zusätzlich die Förderschnecke in eine Ausführungsvariante entsprechend Fig. 1 und Fig. 2 eingetragen.

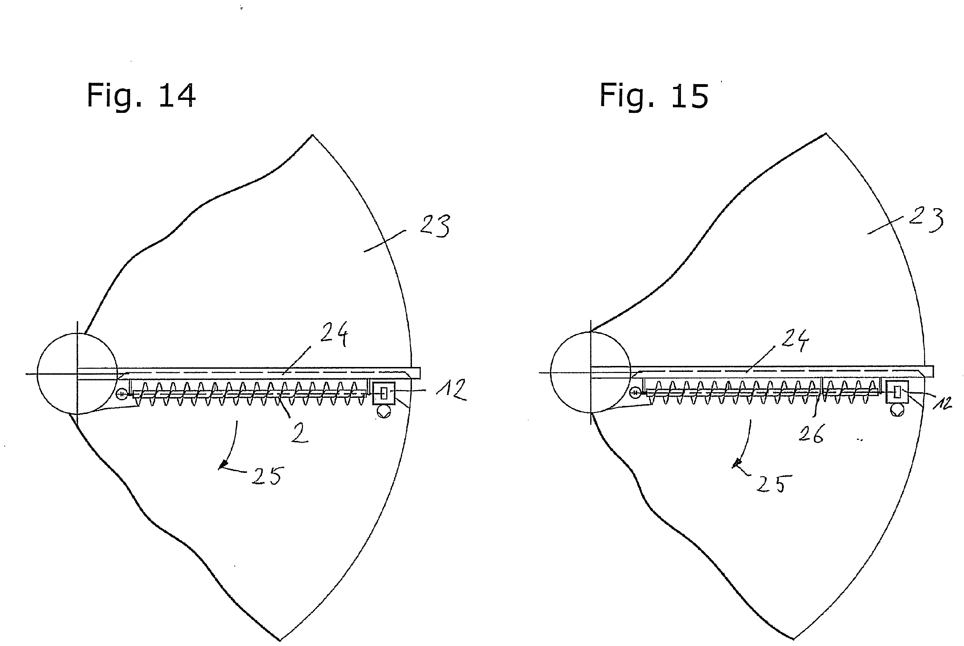

Fig. 14 und Fig. 15 zeigen Ausführungsvarianten, bei denen die Förderschnecke 2 in einem Rundbecken 23 in Verbindung mit einem Rundräumer 24 angeordnet ist. Die Förderschnecke 2 ist in Drehrichtung (Pfeil 25) vor dem Rundräumer 24 situiert und fördert den Schwimmschlamm radial nach außen.

Bei der Ausführungsvariante von Fig. 15 ist eine zusätzliche Lagerung 27 der Förderschnecke 2 vorgesehen.

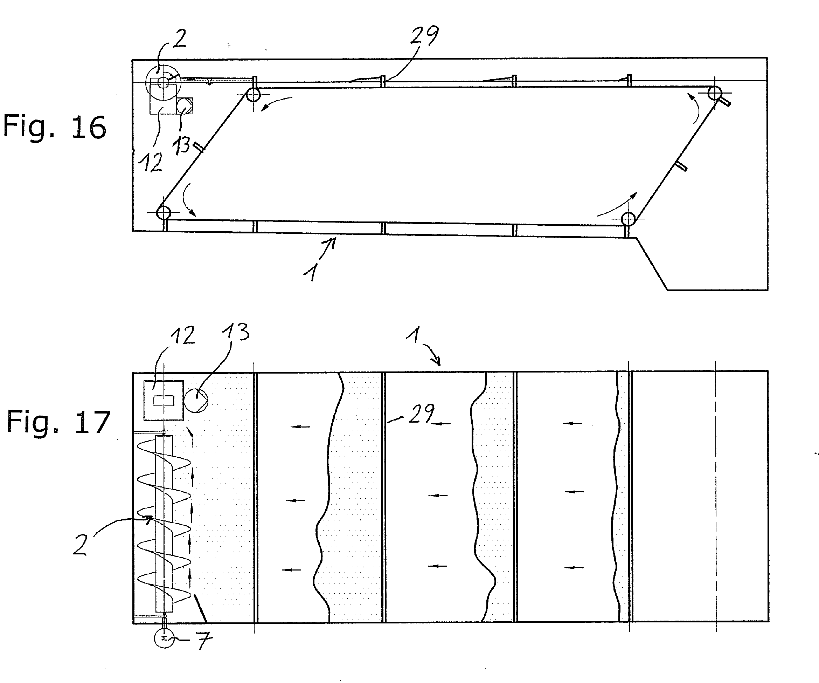

In den Fig. 16 und Fig. 17 sind im Grundriss bzw. Aufriss ein Becken 1 mit einem Längsräumer 29 dargestellt.

Die vorliegende Erfindung ermöglicht es, den Abzug von Schwimmschlamm zu optimieren.

## Patentansprüche

1. Vorrichtung zum Abzug von Schwimmschlamm von einer Flüssigkeitsoberfläche mit schwankendem Flüssigkeitsspiegel (3), mit mindestens einer entlang der Flüssigkeitsoberfläche angeordneten, höhenverstellbar an einer Tragstruktur (9a, 9b) festlegbaren Förderschnecke (2; 22; 32), die aus einem Zentralrohr (4) aufgebaut ist, an dem eine Schraubfläche (6; 26; 36) angebracht ist, und mit einem an einer stromaufwärtigen Seite der Förderschnecke (2; 22; 32) angebrachten Abzugskasten (12), **dadurch gekennzeichnet, dass** das Zentralrohr (4) einen Durchmesser d aufweist, der in der Größenordnung der Schwankungsbreite des Flüssigkeitsspiegels (3) liegt, so dass die betriebsmöglichen Schwankungen des Flüssigkeitsspiegels (3) abgedeckt sind, d.h., dass auch beim niedrigsten Flüssigkeitsspiegel (3) das Zentralrohr (4) ins Wasser eintaucht und der höchstmögliche Flüssigkeitsspiegel (3) nicht oberhalb des Zentralrohrs (4) liegt, und dass das Zentralrohr (4) auftriebsneutral ausgebildet ist, indem das Zentralrohr (4) hohl ist und mindestens eine mit der Flüssigkeit in Kontakt stehende Öffnung (5) aufweist.

2. Vorrichtung nach Anspruch 1, **dadurch gekennzeichnet, dass** die Tragstruktur (9a, 9b) mechanisch höhenverstellbar mit Gleitlagern ausgeführt ist

3. Vorrichtung nach einem der Ansprüche 1 oder 2, **dadurch gekennzeichnet, dass** die Förderschnecke (2; 22; 32) entlang der Flüssigkeitsoberfläche (3) beweglich, vorzugsweise um eine senkrechte Achse schwenkbar, angeordnet ist.

4. Vorrichtung nach einem der Ansprüche 1 bis 3, **dadurch gekennzeichnet, dass** mehrere Förderschnecken (2; 22; 32) in Axialrichtung hintereinander vorgesehen sind, wobei die Förderschnecken (2; 22; 32) vorzugsweise fest miteinander verbunden sind und zwischen den Förderschnecken (2; 22; 32) ein Lager (18) vorgesehen ist.

5. Vorrichtung nach Anspruch 4, **dadurch gekennzeichnet, dass** zwei Förderschnecken (22; 32) entgegengesetzt orientiert vorgesehen sind.

6. Vorrichtung nach einem der Ansprüche 1 bis 5, **dadurch gekennzeichnet, dass** am stromaufwärtigen Ende der Förderschnecke (2; 22; 32) ein Strömungsleitblech (10) vorgesehen ist.

7. Vorrichtung nach einem der Ansprüche 1 bis 6, **dadurch gekennzeichnet, dass** die Förderschnecke (2; 22; 32) eine in Förderrichtung (15) nach vorne geneigte Schraubfläche (6; 26; 36) vorzugsweise mit konstantem Außendurchmesser aufweist.

8. Vorrichtung nach einem der Ansprüche 1 bis 7, **dadurch gekennzeichnet, dass** der Abzugskasten (12) einen schwimmend angeordneten Innenteil (21) aufweist, an dem vorzugsweise eine Wasserüberfallkante ausgebildet ist.

9. Vorrichtung nach einem der Ansprüche 1 bis 8, **dadurch gekennzeichnet, dass** der Abzugskasten (12) im Bereich der Längsachse der Förderschnecke (2; 22; 32) an ihrer stromabwärtigen Seite vorgesehen ist.

10. Vorrichtung nach einem der Ansprüche 1 bis 8, **dadurch gekennzeichnet, dass** der Abzugskasten (12) in Anströmrichtung vor der Förderschnecke (2; 22; 32) an ihrer stromabwärtigen Seite vorgesehen ist.

11. Vorrichtung nach einem der Ansprüche 1 bis 10, **dadurch gekennzeichnet, dass** die Förderschnecke (2; 22; 32) über eine Kunststoffkette (7) oder einen Kunststoffriemen angetrieben ist.

12. Vorrichtung nach einem der Ansprüche 1 bis 11, **dadurch gekennzeichnet, dass** parallel zur Förderschnecke (2; 22; 32) eine höhenverstellbare Tauchwand (28) vorgesehen ist.

13. Vorrichtung nach einem der Ansprüche 1 bis 12, **dadurch gekennzeichnet, dass** der Abzugskasten (12) höhenverstellbar ausgebildet ist.

14. Verfahren zum Abzug von Schwimmschlamm von einer Flüssigkeitsoberfläche mit schwankendem Flüssigkeitsspiegel (3), vorzugsweise mit einer entlang der Flüssigkeitsoberfläche angeordneten, höhenverstellbar an einer Tragstruktur (9a, 9b) festgelegten Förderschnecke (2; 22; 32), die aus einem Zentralrohr (4) aufgebaut ist, an dem eine Schraubfläche (6; 26; 36) angebracht ist, und mit einem an einer stromaufwärtigen Seite der Förderschnecke (2; 22; 32) angebrachten Abzugskasten (12), **dadurch gekennzeichnet, dass** das Zentralrohr (4) einen Durchmesser d aufweist, der in der Größenordnung der Schwankungsbreite des Flüssigkeitsspiegels (3) liegt, so dass die betriebsmöglichen Schwankungen des Flüssigkeitsspiegels (3) abgedeckt sind, d.h. dass auch beim niedrigsten Flüssigkeitsspiegel (3) das Zentralrohr (4) ins Wasser eintaucht und der höchstmögliche Flüssigkeitsspiegel (3) nicht oberhalb des Zentralrohrs (4) liegt und auftriebsneutral ausgebildet ist, indem das Zentralrohr (4) hohl ist und mindestens eine mit der Flüssigkeit in Kontakt stehende Öffnung (5) aufweist, und dass die Anwesenheit von Schwimmschlamm durch einen Sensor überwacht wird und bei Bedarf eine Tauchpumpe aktiviert wird, die Flüssigkeit aus einem Gehäuse des Abzugskastens (12) abzieht.

15. Verfahren zum Abzug von Schwimmschlamm nach Anspruch 14, **dadurch gekennzeichnet, dass** die Überwachung der Anwesenheit von Schwimmschlamm durch einen Reflexions-Lichttaster überwacht wird, der von oben auf den Flüssigkeitsspiegels (3) gerichtet wird.

## Claims

1. A device for the extraction of floating sludge from a liquid surface with a fluctuating liquid level (3), comprising at least one conveyor screw (2; 22; 32) which is arranged along the liquid surface and can be fixed in a height-adjustable manner on a support structure (9a, 9b) and is constructed from a central pipe (4) (12), on which a screw face (6; 26; 36) is attached, and comprising a drain box (12) which is attached on an upstream side of the conveyor screw (2; 22; 32), **characterised in that** the central pipe (4) has a diameter d, which lies in the magnitude of the fluctuation margin of the liquid level (3) so that the operationally possible fluctuations of the liquid level (3) are covered, i.e. the central pipe (4) is immersed in water even at the lowest liquid level (3), and the highest possible liquid level is not located above the central pipe (4), and that the central pipe (4) is constructed so as to be neutrally buoyant, **in that** the central pipe (4) is hollow and has at least one opening (5) in contact with the liquid.

2. A device according to claim 1, **characterised in that** the support structure (9a, 9b) is designed in a mechanically height-adjustable manner with sliding bearings.

3. A device according to one of the claims 1 or 2, **characterised in that** the conveyor screw (2; 22; 32) is arranged movably along the liquid surface (3), preferably pivotable about a vertical axis.

4. A device according to one of the claims 1 to 3, **characterised in that** a plurality of conveyor screws (2; 22; 32) are arranged one behind the other in the axial direction, wherein the conveyor screws (2; 22; 32) are preferably fixedly connected to one another and a bearing (18) is provided between the conveyor screws (2; 22, 32).

5. A device according to claim 4, **characterised in that** two conveyor screws (22; 32) are provided with orientation in opposite directions.

6. A device according to one of the claims 1 to 5, **characterised in that** a flow guide plate (10) is provided at the upstream end of the conveyor screw (2; 22; 32).

7. A device according to one of the claims 1 to 6, **characterised in that** the conveyor screw (2; 22; 32) has a screw face (6; 26; 36) which is inclined forward in the conveying direction (15), preferably with a constant outer diameter.

8. A device according to one of the claims 1 to 7, **characterised in that** the drain box (12) has a inner part (21) arranged in a floating manner, on which a water overflow edge is preferably formed.

9. A device according to one of the claims 1 to 8, **characterised in that** the drain box (12) is provided in the region of the longitudinal axis of the conveyor screw (2; 22; 32) on its downstream side.

10. A device according to one of the claims 1 to 8, **characterised in that** the drain box (12) is provided in the direction of inflow in front of the conveyor screw (2; 22; 32) on its downstream side.

11. A device according to one of the claims 1 to 10, **characterised in that** the conveyor screw (2; 22; 32) is driven by means of a plastic chain (7) or a plastic belt.

12. A device according to one of the claims 1 to 11, **characterised in that** a height-adjustable dipping wall (28) is provided parallel to the conveyor screw (2; 22; 32).

13. A device according to one of the claims 1 to 12, **characterised in that** the drain box (12) is of height-adjustable design.

14. A method for the extraction of floating sludge from a liquid surface with a fluctuating liquid level (3), preferably with a conveyor screw (2; 22; 32) which is arranged along the liquid surface and can be fixed in a height-adjustable manner on a support structure (9a, 9b) and is constructed from a central pipe (4), on which a screw face (6; 26; 36) is attached, and comprising a drain box (12) which is attached on an upstream side of the conveyor screw (2; 22; 32), **characterised in that** the central pipe (4) has a diameter d, which lies in the magnitude of the fluctuation margin of the liquid level (3) so that the operationally possible fluctuations of the liquid level (3) are covered, i.e. the central pipe (4) is immersed in water even at the lowest liquid level (3), and the highest possible liquid level is not located above the central pipe (4) and is constructed so as to be neutrally buoyant, **in that** the central pipe (4) is hollow and has at least one opening (5) in contact with the liquid, and that the presence of floating sludge is monitored by a sensor and, if necessary, a submersible pump is activated which draws liquid from a housing of the drain box (12).

15. A method for the extraction of floating sludge according to claim 14, **characterised in that** the monitoring of the presence of floating sludge is monitored by a reflection light switch, which is directed from above onto the liquid level (3).

## Revendications

1. Procédé d'évacuation de boues flottantes de la surface d'un liquide ayant un niveau (3) fluctuant, comportant au moins une hélice transporteuse (2, 22, 32) montée le long de la surface du liquide, pouvant être fixée en étant réglable en hauteur sur une structure support (9a, 9b), et qui est constituée d'un tube central (4) sur lequel est montée une surface hélicoïdale (6 ; 26 ; 36), ainsi qu'un caisson d'évacuation (12) monté à l'extrémité amont de l'hélice transporteuse (2 ; 22 ; 32),
**caractérisé en ce que**
le tube central (4) a un diamètre d qui est de l'ordre de grandeur de la hauteur de fluctuation du niveau (3) du liquide, de façon à couvrir toutes les fluctuations possibles en cours de fonctionnement du niveau (3) du liquide, c'est-à-dire que pour le plus faible niveau (3) de liquide le tube central (4) plonge dans l'eau et que, le niveau (3) maximum de liquide n'est pas situé au-dessus du tube central (4), et **en ce que** le tube central (4) est neutre en force portant du fait qu'il est creux et comporte au moins une ouverture (5) en contact avec le liquide.

2. Dispositif conforme à la revendication 1,
**caractérisé en ce que**
la structure support (9a, 9b) est réglable mécaniquement en hauteur et est équipée de paliers à glissement.

3. Dispositif conforme à l'une des revendications 1 et 2,
**caractérisé en ce que**
l'hélice transporteuse (2 ; 22 ; 32) est montée mobile le long de la surface (3) du liquide et de préférence pivotante autour d'un axe vertical.

4. Dispositif conforme à l'une des revendications 1 à 3,
**caractérisé en ce qu'**
il est prévu plusieurs hélices transporteuses (2 ; 22 ; 32) montées les unes derrière les autres en direction axiale, les hélices transporteuses (2 ; 22 ; 32) étant de préférences fixées les unes aux autres, et un palier (18) étant monté entre les hélices transporteuses (2 ; 22 ; 32).

5. Dispositif conforme à la revendication 4,
**caractérisé en ce qu'**
il est prévu deux hélices transporteuses (22 ; 32) orientées à l'opposé l'une de l'autre.

6. Dispositif conforme à l'une des revendications 1 à 5,
**caractérisé en ce qu'**
une tôle de déviation de l'écoulement (10) est montée à l'extrémité amont de l'hélices transporteuses (2 ; 22 ; 32).

7. Procédé conforme à l'une des revendications 1 à 6,
**caractérisé en ce que**
l'hélice transporteuse (2 ; 22 ; 32) comporte une surface hélicoïdale (6 ; 26 ; 36) inclinée vers l'avant dans la direction de transport (15), et ayant, de préférence un diamètre externe constant.

8. Dispositif conforme à l'une des revendications 1 à 7,
**caractérisé en ce que**
le caisson d'évacuation (12) comporte une partie interne flottante (21) sur laquelle est de préférence formée une arête de déversement.

9. Dispositif conforme à l'une des revendications 1 à 8,
**caractérisé en ce que**
le caisson d'évacuation (12) est situé dans la zone de l'axe longitudinal de l'hélice transporteuse (2 ; 22 ; 32) sur son côté aval.

10. Dispositif conforme à l'une des revendications 1 à 8,
**caractérisé en ce que**
le caisson d'évacuation (12) est situé à l'avant de l'hélice transporteuse (2 ; 22 ; 32) dans la direction d'écoulement sur son côté aval.

11. Dispositif conforme à l'une des revendications 1 à 10,
**caractérisé en ce que**
l'hélice transporteuse (2 ; 22 ; 32) est entraînée par l'intermédiaire d'une chaîne en matériau synthétique (7) ou d'une courroie en matériau synthétique.

12. Dispositif conforme à l'une des revendications 1 à 11,
**caractérisé en ce qu'**
une paroi plongeuse réglable en hauteur (28) est montée parallèlement à l'hélice transporteuse (2 ; 22 ; 32).

13. Dispositif conforme à l'une des revendications 1 à 12,
**caractérisé en ce que**
le caisson d'évacuation (12) est réglable en hauteur.

14. Procédé d'évacuation de boues flottantes de la surface d'un liquide ayant un niveau (3) fluctuant, de préférence avec une hélice transporteuse (2 ; 22 ; 32) montée le long de la surface du liquide, fixée en étant réglable en hauteur sur une structure support (9a ; 9b) et qui est constituée par un tube central (4) sur lequel est montée une surface hélicoïdale (6 ; 26 ; 36), ainsi qu'avec un caisson d'évacuation (12) monté du côté amont de l'hélice transporteuse (2 ; 22 ; 32),
**caractérisé en ce que**
le tube central (4) a un diamètre d qui est de l'ordre de grandeur de la hauteur de fluctuation du niveau de liquide (3), de façon à couvrir toutes les fluctuations possibles en cours de fonctionnement du niveau de liquide (3), c'est-à-dire que, lorsque le niveau (3) du liquide est le plus faible, le tube central (4) plonge également dans l'eau, et que le niveau maximum (3) de liquide n'est pas situé au-dessus du tube central (4), et ce tube central (4) est neutre en force portante, du fait qu'il est creux et comporte au moins une ouverture (5) en contact avec le liquide, et **en ce que** la présence de boues flottantes est surveillée par un capteur, et, au besoin, est activée une pompe plongeuse qui évacue le liquide du boîtier du caisson d'évacuation (12).

15. Procédé d'évacuation de boues flottantes conforme à la revendication 14,
**caractérisé en ce que**
la surveillance de la présence de boues flottantes est effectuée à l'aide d'un détecteur à spot mobile à réflexion qui est orienté par le haut sur le niveau (3) du liquide.
